**Europäisches Patentamt**

**European Patent Office**

**Office européen des brevets**

(11) Veröffentlichungsnummer: **0 181 989**
**B1**

(12) **EUROPÄISCHE PATENTSCHRIFT**

(45) Veröffentlichungstag der Patentschrift:
**09.03.88**

(21) Anmeldenummer: **84890216.9**

(22) Anmeldetag: **15.11.84**

(51) Int. Cl.⁴: **B 60 N 1/02**

(54) Verstellbarer Fahrzeugsitz.

(43) Veröffentlichungstag der Anmeldung:
**28.05.86 Patentblatt 86/22**

(45) Bekanntmachung des Hinweises auf die Patenterteilung:
**09.03.88 Patentblatt 88/10**

(84) Benannte Vertragsstaaten:
**BE CH DE FR GB IT LI LU NL SE**

(56) Entgegenhaltungen:
**EP - A - 0 001 297**
**EP - A - 0 082 664**
**DE - A - 2 750 408**
**DE - A - 2 754 689**
**FR - A - 2 470 022**
**GB - A - 2 072 881**
**US - A - 3 135 492**
**US - A - 3 597 554**

(73) Patentinhaber: **Obersteiner, Hans, Burggasse 10, A-9020 Klagenfurt Kärnten (AT)**

(72) Erfinder: **Obersteiner, Hans, Burggasse 10, A-9020 Klagenfurt Kärnten (AT)**

(74) Vertreter: **Beer, Otto, Dipl.-Ing. et al, Lindengasse 8, A-1071 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Sitz, insbesondere für Fahrzeuge, bei welchem die Neigung der Sitzfläche und/oder die Neigung der Rückenlehne und/oder die Lage bzw. Neigung der Kopfstütze und/oder der Sitz als solcher z.B. der Höhe nach verstellbar ausgebildet ist und wiederholbar in mehrere unabhängig voneinander auswählbare, voreingestellte Sollpositionen mittels wenigstens eines Stellgliedes, einer Stellgliedsteuerung, einer Einstellschaltung zur Voreinstellung der Sollpositionen und einer mit den Sollpositionen programmierbaren, wenigstens einen Schreib-Lesespeicher aufweisenden Speicherschaltung zur Auswahl und Wiederherstellung der einmal voreingestellten Sollpositionen bringbar ist, und die Einstellschaltung von der Speicherschaltung getrennt ist.

Eine solche Lösung wurde z.B. durch die EP-A-82 664 vorgeschlagen. Bei dieser sind zwei getrennte Stellgliedsteuerungen, von denen eine mit der Einstellschaltung und die andere mit der Speicherschaltung verbunden ist. Dies führt aber zu einem sehr hohen schaltungstechnischen Aufwand, wobei noch entsprechende Verknüpfungsschalter vorgesehen sein müssen.

Weiters wurde durch die DE-A-2 754 689 ein Sitz mit einer Einrichtung zur Vorprogrammierung bestimmter Sitzpositionen bekannt. Bei diesem Sitz sind Speicherpotentiometer vorgesehen, in die analoge Speicherwerte einschreibbar sind. Mit diesen Speicherpotentiometern ist eine Voreinstellung der gewünschten Sitzposition möglich, wobei durch die Stellung der Speicherpotentiometer gleichzeitig die eingegebenen Werte gespeichert werden.

Der Nachteil dieser bekannten Lösung liegt darin, dass die Voreinstellung der gewünschten Sitzposition und die Speicherung der entsprechenden Werte in den Speicherpotentiometern vereinigt sind, wodurch Manipulationen an den Einstellelementen der Steuerung unvermeidbar sind. Die Speicherpotentiometer müssen daher entsprechend ausgebildet sein.

Ausserdem wurde durch die DE-A-2 750 408 ein Kraftfahrzeug vorgeschlagen, bei dem Kraftfahrzeugbedienung erleichternde Positionsverstellung aufweist, welche Einrichtung eine elektronische Speichereinheit aufweist, in die einzelne Positionsstellungen und Regelstellungen der Kraftfahrzeugeinrichtungen speicherbar und abrufbar sind und beim Abrufen der bespeicherten Positionsstellungen und Regelstellungen die Kraftfahrzeugeinrichtungen automatisch erstellt werden.

Ziel der Erfindung ist es, einen Sitz der eingangs erwähnten Art vorzuschlagen, der mit geringem schaltungstechnischem Aufwand eine Speicherung bestimmter voreingestellter Positionen und eine Einstellung des Sitzes aufgrund dieser gespeicherten Positionen ermöglicht.

Erfindungsgemäss wird dies dadurch erreicht, dass die Einstellschaltung über einen Schalter mit einem Eingang und die Speicherschaltung mit einem zweiten Eingang der Stellgliedsteuerung verbunden ist und die Speicherschaltung über einen weiteren Schalter von Schreib- und Lesebetrieb umschaltbar ist. Auf diese Weise gelingt es, mit einer Stellgliedsteuerung das Auslangen zu finden, wobei sich ein überaus einfacher Schaltungsaufbau ergibt, wobei durch einfaches Umschalten die Speicherschaltung in den Schreib- bzw. Lesebetrieb gebracht werden kann.

Nach einem weiteren Merkmal der Erfindung kann vorgesehen sein, dass eine Sollposition über einen Positionssensor und einen Wahlschalter in den bzw. in einen auswählbaren Schreib-Lesespeicher der Speicherschaltung einschreibbar und aus diesem wiederholt bei deaktivierter Einstellschaltung auslesbar ist. Damit wird erreicht, dass in voneinander völlig unveränderter Weise die einmal eingespeicherten, den Sollpositionen der einzelnen Benützer zugeordneten Signaldaten immer wieder abgerufen werden können und somit die Einstellung bzw. Lage des Fahrzeugsitzes bzw. von Teilen desselben völlig automatisch und in einer exakt reproduzierbaren Weise erfolgen kann.

Eine in konstruktiver Hinsicht, wie auch im Hinblick auf die Bedienung sehr einfache Lösung ergibt sich, wenn der die Einstellschaltung mit der Stellgliedsteuerung wahlweise koppelbare Schalter mit dem die Betriebsart der Speicherschaltung steuernden Schalter mechanisch gekoppelt ist. In diesem Falle genügt es, einen einzigen Schalter zu betätigen, um die Einrichtung in den Einstellbetrieb, in dem sich die Speicherschaltung im Schreibbetrieb befindet, wodurch die Einstellwerte sofort in die Speicherschaltung eingeschrieben werden können.

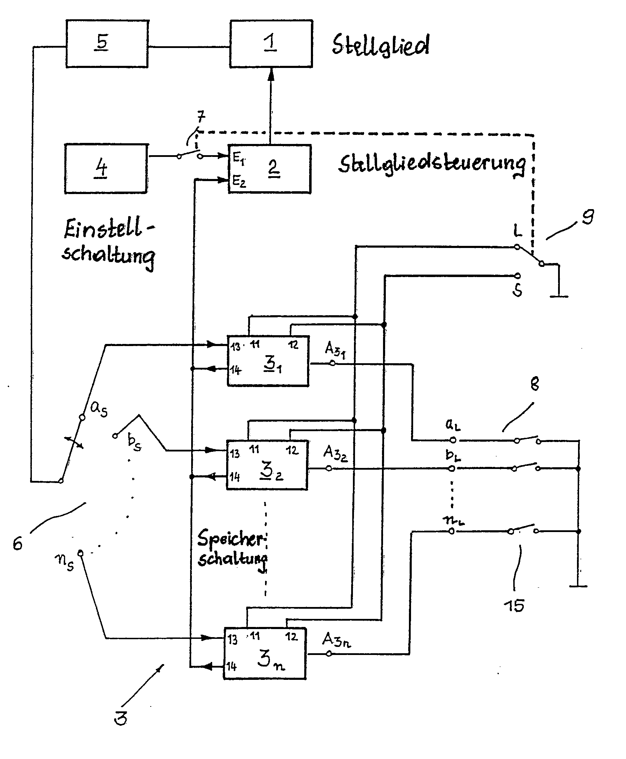

Nachstehend ist die Erfindung unter Bezugnahme auf die Zeichnung, die ein Blockschaltbild einer Schaltungsanordnung eines erfindungsgemässen Sitzes zeigt, beispielsweise beschrieben.

Ein Stellglied 1, z.B. ein Stellmotor, wie etwa ein Schrittschaltmotor ist über eine hier nicht näher gezeigte mechanische Kupplungseinrichtung in an sich bekannter Weise so z.B. mit der Rückenlehne eines Fahrzeugsitzes oder dem Sitzpolster verbunden, dass durch das Stellglied 1 eine Verstellung der Neigung der Rückenlehne oder der Höheneinstellung des Sitzes erfolgen kann. An das Stellglied 1 ist der Ausgang einer Stellgliedsteuerung 2 angeschlossen, an deren Eingängen $E_1$ und $E_2$ je nach Stellung von Schaltern 7 und 9 Steuersignale anliegen. Die Steuercharakteristik der Stellgliedsteuerung 2 ist derart, dass immer, wenn ein neues Signal an $E_1$ oder $E_2$ angelegt wird, das Stellglied 1 in eine bestimmte Ausgangslage gebracht und erst dann in die dem anliegenden Signal entsprechende Position gebracht wird. Gegebenenfalls enthält die Stellgliedsteuerung 2 auch einen Verstärker, der die Eingangssignale in einem für die Verstellung des Stellgliedes ausreichenden Mass verstärkt. An den Eingang $E_1$ der Stellgliedsteuerung 2 ist über den Schalter 7 eine Einstellschaltung 4, z.B. im Falle der Verwendung eines Schrittschaltmotors als Stellglied 1 ein Impulsgenerator angeschlossen. An den Eingang $E_2$ ist der Leseausgang einer mindestens einen Schreib-Lesespeicher enthaltenden Speicherschaltung 3 geführt, die es in der nachstehend noch näher zu erläuternden Weise gestattet, die von einem Benützer einmal gewählten Signale zur Einstellung des Stellgliedes und somit der Teile des Fahrzeugsitzes in einer vorgegebenen Stellung zu speichern und diese Signale auf einen Abgabebefehl hinauf immer wieder abzugeben.

Die Speicherschaltung 3 umfasst n Schreib-Lesespeicher $3_i$ mit jeweils einem Adresseneingang $A_{3i}$, Anschlüsse 11 und 12 zur Konditionierung des Speichers in den Lese- bzw. Schreibzustand, einen Anschluss 13 für das Einschreiben und einen Anschluss 14 für das Auslesen von Daten. Die Anschlüsse 13 sind zu Kontakten $a_s \ldots n_s$ eines dem Schreibvorgang zugeordneten Wahlschalters 6 und die Adresseneingänge $A_{3i}$ zu Kontakten $a_L \ldots n_L$ eines dem Auslesen von Daten zugeordneten Schalters 8 geführt.

Alle Anschlüsse 11 der Schreib-Lesespeicher $3_i$ sind an den Kontakt L und alle Anschlüsse 12 derselben sind an den Kontakt S des Schalters 9 geführt. Sämtliche Anschlüsse 14 für das Auslesen der Daten aus den Schreib-Lesespeichern $3_i$ sind mit dem Eingang $E_2$ der Steuerung 2 verbunden.

Ferner ist noch ein Positionssensor 5 vorgesehen, welcher der Position des Stellgliedes 1 entsprechende Positionssignale liefert und diese, gegebenenfalls nach Umsetzung in Digitalsignale, an den Wahlschalter 6 legt.

Die Funktionsweise der Schaltungsanordnung ist wie folgt:

Für die erstmalige, benützergerechte Einstellung des Stellgliedes 1, d.h. z.B. der für einen Benützer angepasstesten Neigung der Rückenlehne oder der Höhe der Sitzfläche eines Fahrzeugsitzes, betätigt der Benützer den Schalter 7, so dass von der Einstellschaltung 4 erzeugte Signale am Eingang $E_1$ der Stellgliedsteuerung 2 anliegen. Zufolge der Steuercharakteristik verstellt sich das Stellglied und demzufolge die Rückenlehne oder die Höheneinstellung des Sitzes in die Ausgangslage und darauffolgend in Übereinstimmung mit den Signalen der Einstellschaltung 4 so lange, bis der Benützer nach Erreichen der ihm angepasstesten Lage den Schalter 7 wieder öffnet.

Der Schaltarm des starr mit dem Schalter 7 gekoppelten Schalters 9 befindet sich bei geschlossenem Schalter 7 in Stellung S, so dass die Schreib-Lesespeicher $3_i$ für den Schreibzustand konditioniert sind. Vor einer Betätigung des Schalters 7 hat der Benützer durch Verstellung des Wahlschalters 6 einen Schreib-Lesespeicher, z.B. $3_1$, ausgewählt, in den, solange der Schalter 7 geschlossen ist, laufend die vom Positionssensor 5 abgegebenen Signale eingespeichert werden.

Wird der Schalter 7 geöffnet, so entsprechen die in die Speicherschaltung 3 eingespeicherten Daten genau der Stellung des Stellgliedes 1, die der dem Benützer angepasstesten 47 Laufendage bzw. Neigung des Fahrzeugsitzes bzw. von Teilen desselben entspricht. Auf diese Weise können die Benützer Daten dieser Art in jeweils einen von ihnen mit dem Wahlschalter 6 ausgewählten Speicher abspeichern.

Findet nun ein Benützer den Fahrzeugsitz bzw. Teile desselben verstellt, so kann er z.B. die Neigung der Rückenlehne oder die Höhe des Sitzes sofort in die ihm angepassteste Lage dadurch bringen, dass er bei in Stellung L befindlichem Schalter 9 jenen Kontakt 15 des Schalters 8 drückt, der dem Speicher zugehörig ist, in dem die Daten der ihm angepasstesten Stellung abgespeichert sind, wodurch diese Daten ausgelesen und an den Eingang $E_2$ der Stellgliedsteuerung 2 angelegt werden. Diese stellt das Stellglied 1 zunächst in die Eingangslage zurück und darauffolgend, entsprechend den anliegenden Daten, in die Stellung, die der diesem Benützer angepasstesten Stellung des Fahrzeugsitzes entspricht. Die Kontakte 15 sind bevorzugt selbstöffnende Kontakte, d.h. solche, die sich nach einer vorbestimmten Zeitdauer wieder öffnen, oder überhaupt lediglich Drucktasten, so dass mit Sicherheit gewährleistet ist, dass zeitlich nur ein einziger dieser Kontakte betätigt ist.

Vorstehend ist die Funktion der erfindungsgemässen Schaltungsanordnung anhand der Verstellung der Rückenlehne eines Fahrzeugsitzes beschrieben worden. Die Erfindung ist aber hierauf nicht beschränkt, vielmehr kann auch die Neigung oder die Höhe der Sitzfläche, die Lage und Neigung der Kopfstütze oder überhaupt die Gesamtlage des Fahrzeugsitzes in vorstehender Weise verstellt werden.

Darüber hinaus kann eine weitere Ausführungsform der Erfindung auch noch darin bestehen, dass ein und dasselbe Stellglied für die Verstellung mehrerer Bestandteile des Fahrzeugsitzes dient, so z.B. der Neigung sowohl der Sitzfläche als auch jener der Rückenlehne und/oder der Kopfstütze. Die Kupplungseinrichtung ist in diesem Falle bestandteilselektiv ausgebildet und die Stellgliedsteuerung 2 besteht zweckmässig aus einer zentralen Rechnereinheit.

Sind dem Sitz, wie bei Kraftfahrzeugen üblich, Rückblickspiegel (Aussenspiegel und/oder Innenspiegel) zugeordnet und diese motorisch ver- bzw. einstellbar, dann kann im Rahmen der Erfindung auch der Rückblickspiegel in die Schaltungsanordnung mit einbezogen werden.

Die Erfindung ist nicht auf Sitze in Kraftfahrzeugen beschränkt, sondern kann z.B. auch in anderen Fahrzeugarten, wie Flugzeugen angewendet werden.

Um zu sichern, dass die im Lesespeicher eingeschriebenen Sollpositionen auch bei einem Ausfall der Stromversorgung des Fahrzeuges gespeichert bleiben, kann der erfindunsgemässen Schaltungsanordnung eine eigene Stromquelle (Akkumulator) zugeordnet sein.

## Patentansprüche

1. Sitz, insbesondere für Fahrzeuge, bei welchem die Neigung der Sitzfläche und/oder die Neigung der Rückenlehne und/oder die Lage bzw. Neigung der Kopfstütze und/oder der Sitz als solcher z.B. der Höhe nach verstellbar ausgebildet ist und wiederholbar in mehrere unabhängig vonein-

ander auswählbare, voreingestellte Sollpositionen mittels wenigstens eines Stellgliedes (1), einer Stellgliedsteuerung (2), einer Einstellschaltung (4) zur Voreinstellung der Sollpositionen und einer mit den Sollpositionen programmierbaren wenigstens einen Schreib-Lesespeicher (3$_i$) aufweisenden Speicherschaltung (3) zur Auswahl und Wiederherstellung der einmal voreingestellten Sollpositionen bringbar ist, und die Einstellschaltung (4) von der Speicherschaltung (3) getrennt ist, dadurch gekennzeichnet, dass die Einstellschaltung (4) über einen Schalter (7) mit einem Eingang (E$_1$) und die Speicherschaltung (3) mit einem zweiten Eingang (E$_2$) der Stellgliedsteuerung (2) verbunden ist und die Speicherschaltung (3) über einen weiteren Schalter (9) von Schreibauf Lesebetrieb umschaltbar ist.

2. Sitz nach Anspruch 1, dadurch gekennzeichnet, dass eine Sollposition über einen Positionssensor (5) und einen Wahlschalter (6) in den bzw. in einen auswählbaren Schreib-Lesespeicher (3$_i$) der Speicherschaltung (3) einschreibbar und aus diesem wiederholt bei deaktivierter Einstellschaltung (4) auslesbar ist.

3. Sitz nach Anspruch 1 oder 2, dadurch gekennzeichnet, dass der die Einstellschaltung (4) mit der Stellgliedsteuerung (2) wahlweise koppelbare Schalter (7) mit dem die Betriebsart der Speicherschaltung (3) steuernden Schalter (9) mechanisch gekoppelt ist.

## Claims

1. Seat, especially for vehicles, in which the inclination of the seating surface and/or the inclination of the backrest and/or the position or inclination of the headrest and/or the seat itself is adjustable, e.g. in height, and can be brought repeatably into a plurality of independently selectable, pre-set positions by means of at least a positioning member (1), a positioning member controller (2), a pre-setting circuit (4) for pre-setting the set positions and a storage circuit (3) programmable with the positions and comprising at least one read-write memory (3$_i$), for selection and re-establishment of the set positions once pre-set, and wherein the pre-setting circuit (4) is separate from the storage circuit (3),

characterized in that the pre-setting circuit (4) is connected by way of a switch (7) with one input (E$_1$) and the storage circuit (3) is connected with a second input (E$_2$) of the positioning member controller (2), and the storage circuit (3) is switchable from write to read operation by means of a further switch (9).

2. Seat, according to claim 1,

characterized in that a set position is writable by means of a position sensor (5) and a selector switch (6) in the or a selectable one of the read-write memories (3$_i$) of the read-write memories (3$_i$) of the storage circuit (3) and can be read out of this repeatedly with the pre-setting circuit (4) deactivated.

3. Seat, according to claim 1 or 2,

characterized in that the switch (7) which selectively couples the pre-setting circuit (4) with the positioning member controller (2) is mechanically coupled to the switch (9) which controls the mode of operation of the storage circuit (3).

## Revendications

1. Siège, en particulier pour véhicules, avec possibilité de réglage de l'assise en inclinaison et/ou du dossier en inclinaison et/ou de l'appui-tête en position ou inclinaison et/ou du siège en tant que tel par exemple en hauteur, et avec possibilité de l'amener de façon répétée dans plusieurs positions de consigne préréglées, susceptibles d'être sélectionnées indépendamment les unes des autres, à l'aide d'au moins un organe actionneur (1), d'une commande d'organe actionneur (2), d'un circuit de réglage (4) pour le préréglage des positions de consigne, et d'un circuit de mémoire (3) programmable avec les positions de consigne et présentant au moins une mémoire à inscription-lecture (3$_i$), pour la sélection et le rétablissement des positions de consigne préréglées, le circuit de réglage (4) étant séparé du circuit de mémoire (3), caractérisé par le fait que le circuit de réglage (4) est relié par un interrupteur (7) à une première entrée (E$_1$) et le circuit de mémoire (3) à une seconde entrée (E$_2$) de la commande d'organe actionneur (2) et le circuit de mémoire (3) peut être commuté par un commutateur (9) du mode inscription au mode lecture.

2. Siège suivant la revendication 1, caractérisé par le fait qu'une position de consigne peut être inscrite par un détecteur de position (5) et un sélecteur (6) dans la ou une mémoire écriture-lecture (3$_i$) sélectionnable du circuit de mémoire (3) et être lue de façon répétée dans cette mémoire lorsque le circuit de réglage (4) est désactivé.

3. Siège suivant la revendication 1 ou 2, caractérisé par le fait que l'interrupteur (7) couplant le circuit de réglage (4) de façon sélective à la commande d'organe actionneur (2) est couplé mécaniquement avec le commutateur (9) commandant le mode de fonctionnement du circuit de mémoire (3).